# EUROPÄISCHE PATENTSCHRIFT

(11) **EP 0 387 620 B1**
(45) Veröffentlichungstag und Bekanntmachung des Hinweises auf die Patenterteilung: **22.09.1993**
(21) Anmeldenummer: 90103996.6
(22) Anmeldetag: 01.03.1990
(51) Int. Cl.: A01B 49/06

(54) **Geschlossene Gerätekombination**
Combination of ground working tools
Combinaison d'outils agricoles

(30) Priorität: 11.03.1989 DE 3907936
(43) Veröffentlichungstag der Anmeldung: 19.09.1990
(73) Patentinhaber: Amazonen-Werke H. Dreyer GmbH & Co. KG, D-49205 Hasbergen (DE)
(72) Erfinder: Siefken, Claus, D-2875 Ganderkesee 1 (DE)

(56) Entgegenhaltungen:
- DE-A- 2 643 857
- DE-A- 2 824 808
- US-A- 3 265 137

## Beschreibung

Die Erfindung betrifft eine geschlossene Gerätekombination gemäß Oberbegriff des Anspruches 1.

Derartig ausgebildete Gerätekombinationen sind in der landwirtschaftlichen Praxis bekannt und werden für große Arbeitsbreiten für beispielsweise 6 m und mehr eingesetzt. Die Nachlaufgeräte können beispielsweise als auf Walzen aufgesattelte Drillmaschinen ausgebildet sein, wobei die Walzen zur Rückverfestigung des durch das vorlaufende Bodenbearbeitungsgerät bearbeiteten Bodens dienen, bevor das Saatgut von den Säscharen im Boden abgelegt wird.

Beim Einsatz dieser geschlossenen Gerätekombinationen auf dem Acker hat sich jetzt gezeigt, daß die hinter dem Bodenbearbeitungsgerät angeordneten, als auf Nachlaufwalzen aufgesatteltete Drillmaschinen ausgebildeten Nachlaufgeräte das Bestreben haben, sich derartig schräg hinter das Bodenbearbeitungsgerät auszurichten, daß sie in Fahrtrichtung gesehen nach außen laufen, d.h., die jeweiligen äußeren Enden der Nachlaufgeräte weisen einen in Fahrtrichtung gesehen größeren Abstand zu den Dreipunktkupplungselementen des Bodenbearbeitungsgerätes auf, als diejenigen der Maschinenmitte zugeordneten Enden der Nachlaufgeräte. Die Nachlaufgeräte laufen also voneinander weg. Diese jeweilige schräge, zum Auseinanderlaufen der Nachlaufgeräte führende Einstellung der Nachlaufgeräte gegenüber dem Bodenbearbeitungsgerät beruht auf den zur Herstellung der einzelnen, miteinander gekoppelten Maschinen bzw. Geräte vorgegebenen, notwendigen Fertigungstoleranzen der entsprechenden Kupplungsteile. Begünstigt wird die schräge, von der Maschinenseite weglaufende Einstellung der Nachlaufgeräte noch durch den eine gewisse Eigenelastizität aufweisenden Tragrahmen des Bodenbearbeitungsgerätes, welches während des Arbeitseinsatzes eine derartige geringfügige Durchbiegung aufweist, daß die äußeren Enden des Bodenbearbeitungsgerätes entgegen der Fahrtrichtung leicht nach hinten weisen. Dieses Auseinanderlaufen der beiden Nachlaufgeräte bewirkt, daß die Saatreihenabstände der unmittelbar in Maschinenmitte angeordneten Säschare größer ist, als in den übrigen Bereichen der Nachlaufgeräte, so daß ein breiter, unerwünschter unbesäter Streifen in der Mitte der Gerätekombination entsteht.

Der Erfindung liegt nun die Aufgabe zugrunde, auf einfache Weise auch im Bereich der Maschinenmitte eine lückenlose Bodenbearbeitung bzw. Einsaat von Saatgut zu ermöglichen.

Diese Aufgabe wird erfindungsgemäß durch die kennzeichnenden Merkmale des Anspruches 1 gelöst.

Infolge dieser Maßnahmen haben die Nachlaufgeräte immer das Bestreben, zur Maschinenmitte hin zu laufen, es ist also ein gewisser Vorlauf eingebaut. Während des Arbeitseinsatzes vergrößert sich der in Draufsicht gesehen stumpfe Winkel, der durch die Drehachsen der auf den Boden abrollenden Räder oder Walzen der Nachlaufgeräte eingeschlossen wird, so daß die Drehachsen der Räder oder Walzen im Arbeitseinsatz auf dem Feld wieder annähernd miteinander fluchten.

Die DE-A 28 24 808 zeigt eine Gerätekombination, welche ein vorlaufendes Bodenbearbeitungsgerät und dahinter angeordnete, auf dem Boden abrollende Krümelwalzen zeigen, deren Drehachsen nicht miteinander fluchten, sondern einen der Fahrtrichtung zugewandten Seite in der Draufsicht gesehen stumpfen Winkel miteinander einschließen, so daß die Nachlaufgeräte das Bestreben haben, zur Maschinenmitte zu laufen. Die Krümelwalzen sind an einem starren Rahmen angeordnet. Weiterhin schließen die Drehachsen der Nachlaufgeräte einen derartigen Winkel miteinander ein, daß dieser auch während des Arbeitseinsatzes in voller Größe erhalten bleibt, so daß auch während des Arbeitseinsatzes der Gerätekombination die Winkellage der Krümelwalze zueinander beibehalten bleibt. Während des Arbeitseinsatzes fluchten die Drehachsen der Krümelwalzen keinesfalls miteinander, so daß hier die Vorteile der im Anspruch 1 umschriebenen Gerätekombination nicht im entferntesten erreicht werden können.

Bei der Ausführungsform ist erfindungsgemäß vorgesehen, daß der äußere Unterlenker jeweils kürzer ist, als der innere Unterlenker. Hierdurch läßt sich der Vorlauf der beiden Nachlaufgeräte zueinander einstellen. Beim Arbeitseinsatz auf dem Feld verringert sich der durch die unterschiedlich langen Unterlenker eingestellte Vorlauf der Nachlaufgeräte zueinander, was zum Einen durch die zur Herstellung der einzelnen, miteinander gekoppelten Maschinen notwendigen vorhandenen Toleranzen der miteinander in Wirkverbindung stehenden Bauteile kommt und zum Anderen von der Eigenelastizität des Rahmens des vorlaufenden Bodenbearbeitungsgerätes herrührt.

Der Vorlauf der jeweiligen äußeren Bereiche der Nachlaufgeräte läßt sich erfindungsgemäß auch dadurch einstellen, daß der vordere Anlenkpunkt jeweils für den inneren Unterlenker an dem vorlaufenden Bodenbearbeitungsgerät etwas nach hinten versetzt angeordnet ist.

In einem anderen Ausführungsbeispiel ist erfindungsgemäß vorgesehen, daß der vordere Anlenkpunkt jeweils für den äußeren Unterlenker an dem vorlaufenden Bodenbearbeitungsgerät etwas nach vorne versetzt gegenüber dem inneren Anlenkpunkt für den inneren Unterlenker angeordnet ist.

In einer besonders bevorzugten Ausführungsform ist erfindungsgemäß vorgesehen, daß zwischen den einander berührenden Seiten der Nachlaufgeräte Dämpfungs- und Gleitelemente angeordnet sind. Infolge dieser Maßnahme werden die beiden nebeneinander, jeweils höhenbeweglich zueinander angeordneten Nachlaufgeräte in ihrem Berührungsbereich in der Mitte der Gerätekombination in bevorzugter Weise vor Beschädigungen geschützt. Eine unabhängige Höhenbeweglichkeit beider Nachlaufgeräte gegeneinander ist gewährleistet, so daß sich die Nachlaufgeräte Bodenunebenheiten exakt anpassen können.

In einer Ausführungsform ist erfindungsgemäß vorgesehen, daß die Nachlaufgeräte als Nachlaufwalzen ausgebildet sind, welche die Arbeitstiefe der Bodenbearbeitungswerkzeuge des vorlaufenden Bodenbearbeitungsgerätes bestimmen.

In einer besonders bevorzugten Ausführungsform ist erfindungsgemäß vorgesehen, daß die Nachlaufgeräte bzw. die Nachlaufwalze als an sich bekannter Reifenpacker ausgebildet ist, wobei auf dieser Nachlaufwalze eine Drillmaschine mit nachgeordneten Säscharen aufgesattelt ist. Dadurch, daß die Drehachse der Walzen nicht miteinander fluchten, sondern einen auf der Fahrtrichtung zugewandten Seite in Draufsicht gesehen stumpfen Winkel miteinander einschließen, so daß die Nachlaufgeräte einen gewissen Vorlauf aufweisen und das Bestreben haben, zur Maschinenmitte zu laufen, sind die Saatreihenabstände der unmittelbar in Maschinenmitte angeordneten der benachbarten Drillmaschinen Säschare in etwa so groß, wie die Reihenabstände der übrigen Säschare der Nachlaufgeräte, so daß eine entsprechende Rückverfestigung des Saatbettes durch die Walzen und eine lückenlose Einsaat von Saatgut auch im Bereich der Maschinenmitte ermöglicht wird. Auch bei diesen, als auf Nachlaufwalzen aufgesattelte Drillmaschinen ausgebildeten Nachlaufgeräte vergrößert sich während des Arbeitseinsatzes der Nachlaufgeräte auf dem Acker der in Draufsicht gesehen stumpfe Winkel, der durch die Drehachsen der auf den Boden abrollenden Räder oder Walzen der Nachlaufgeräte eingeschlossen wird, so daß die Drehachsen der Räder oder Walzen im Arbeitseinsatz auf dem Feld annähernd miteinander fluchten.

Die Anordnung der mit einem gewissen Vorlauf versehenen Nachlaufgeräte an einem Bodenbearbeitungsgerät großer Arbeitsbreite trägt auch zur Entlastung des Tragrahmens des Bodenbearbeitungsgerätes bei, da die durch die auf den Boden abrollenden Räder oder Walzen sich erstreckenden Drehachsen der einzelnen Nachlaufgeräte im Einsatz auf dem Feld annähernd miteinander fluchten. Die Nachlaufgeräte belasten den Tragrahmen des Bodenbearbeitungsgerätes also nicht mehr durch die zusätzlichen Kräfte, die durch das Auseinanderlaufen der Nachlaufgeräte entstehen und auf den Tragrahmen des Bodenbarbeitungsgerätes übertragen werden.

Selbstverständlich lassen sich die vorab geschilderten erfindungsgemäßen Merkmale auch auf aus zwei nebeneinander angeordneten, über einen Kuppelrahmen miteinander verbunden Bodenbearbeitungsgeräten übertragen, hinter denen jeweils ein Nachlaufgeräte angeordnet ist. Des weiteren ist es natürlich auch möglich, die erfindungsgemäße Anordnung der beiden Nachlaufgeräte hinter einem vorlaufenden Bodenbearbeitungsgerät bzw. Bodenbearbeitungsgeräten auch auf einen Drillmaschinenverbund, bestehend aus zwei nebeneiannder an einem vorlaufenden Rahmen angekuppelten Drillmaschinen, zu übertragen..

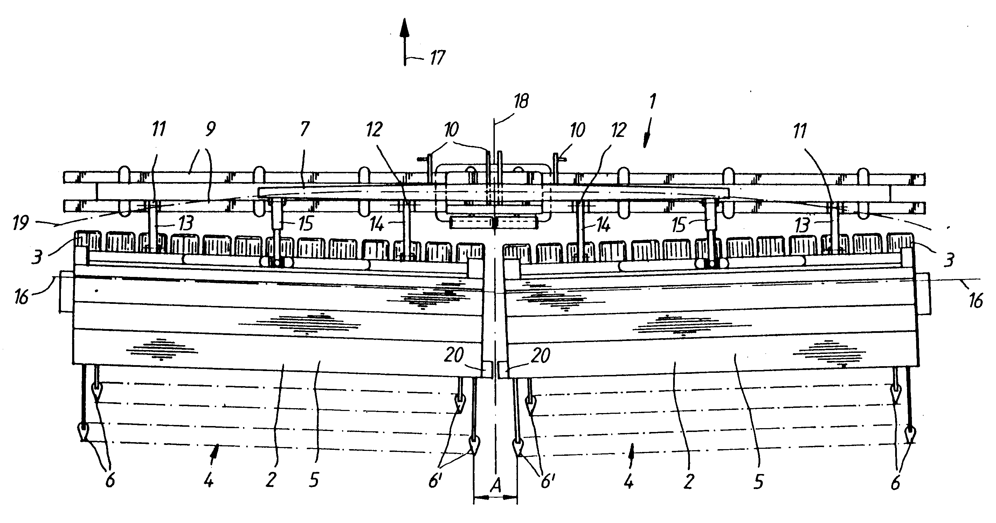

Weitere Einzelheiten der Erfindung sind der Beispielsbeschreibung und der Zeichnung zu entnehmen. Hierbei zeigt die Zeichnung
die in erfindungsgemäßer Weise an einem Bodenbearbeitungsgerät angeordneten Nachlaufgeräte.

Die geschlossene Gerätekombination besteht aus dem vorlaufenden, als Rüttelegge ausgebildeten Bodenbearbeitungsgerät 1 und den zwei dahinter angeordneten Nachlaufgeräten 2, die etwa die halbe Arbeitsbreite wie das vorlaufende Bodenbearbeitungsgerät 1 aufweisen. Die Nachlaufgeräte 2 weisen jeweils die Nachlaufwalze 3 auf, die als bekannter Reifenpacker ausgebildet ist. Auf jeder dieser Nachlaufwalzen 3 ist jeweils die Drillmaschine 4 mit dem Vorratsbehälter 5 und den nachgeordneten Säscharen 6 aufgesattelt.

Das Bodenbearbeitungsgerät 1 weist den Rahmen 7 auf, an dem die über das Getriebe 8 oszillierend angetriebenen Zinkenbalken 9, an dem die Bodenbearbeitungswerkzeuge angeordnet sind, gelagert sind. Das Getriebe 8 der Rüttelegge 1 wird über eine nicht dargestellte Gelenkwelle von der Zapfwelle des die Gerätekombination transportierenden Ackerschleppers angetrieben, wobei die Gerätekombination mittels der Dreipunktkupplungselemente 10 an dem Dreipunktkraftheber des die Gerätekombination transportierenden Ackerschleppers angelenkt ist, so daß die gesamte Gerätekombination von dem Ackerschlepper ausgehoben werden kann.

An dem Rahmen 7 des Bodenbearbeitungsgerätes 1 sind die Anlenkpunte 11 und 12 jeweils für die zwei beabstandeten Unterlenker 13 und 14 befestigt. Mittels der Unterlenker 13 und 14 und des Oberlenkers 15 ist jedes Nachlaufgerät 2 an dem Bodenbearbeitungsgerät 1 angekoppelt. Die Unterlenker 13 und 14 wirken jeweils mit am Bodenbearbeitungsgerät 1 angeordneten Anschlägen zusammen, so daß sich über die jeweilige Nachlaufwalze 3 die Arbeitsteife der an den Zinkenbalken 9 angeordneten Bodenbearbeitungswerkzeuge einstellen läßt.

Der äußere Unterlenker 13 ist jeweils kürzer ausgebildet als der innere Unterlenker 14. Durch die unterschiedlich lange Ausbildung der Unterlenker 13 und 14 wird erreicht, daß die durch die auf den Boden abrollenden Räder der Nachlaufwalzen 3verlaufenden Drehachsen 16 der Gerätekombination in der dargestellten Position, die mit der Ruheposition vergleichbar ist, nicht miteinander fluchten, sondern einen auf der in Fahrtrichtung 17 zugewandten Seite in der Draufsicht gesehen einen stumpfen Winkel miteinander einschliessen, so daß die Nachlaufgeräte 2 das Bestreben haben, zur Maschinenmitte 18 zu laufen.

Wird die Gerätekombination nun in Fahrtrichtung 17 während des Arbeitseinsatzes über das Feld gezogen, erfolgt eine gewisse Ausrichtung der Nachlaufgeräte 2, wobei sich der in der Draufsicht gesehen stumpfe Winkel, welcher zwischen den Drehachsen 16 der Nachlaufgeräte 2 nun eingeschlossen ist, vergrößert, so daß die Drehachsen 16 der Nachlaufgeräte 2 annähernd miteinander fluchten.

Dadurch, daß die Nachlaufgeräte 2 mit einem Vorlauf zur Maschinemitte 18 hin hinter dem Bodenbearbeitungsgerät 1 angeordnet sind, lassen sich die Fertigungstoleranzen der einzelnen miteinander zusammenwirkenden Kupplungsteile ausgleichen, wobei gleichzeitig die mit strichpunktierter Linie 19 in übertriebener Weise dargestellte Durchbiegung des Rahmens 7 des Bodenbearbeitungsgerätes 1 ausgeglichen wird, so daß die Drehachsen 16 der Nachlaufgeräte 2 während des Arbeitseinsatzes auf dem Feld annähernd miteinander fluchten. Durch die Ausbildung der unterschiedlich langen Unterlenker 13 und 14, die zur Einstellung eines gewissen Vorlaufes der Nachlaufgeräte 2 gegenüber dem Bodenbearbeitungsgerät 1 dienen, wird verhindert, daß die Nachlaufgeräte 2 beim Feldeinsatz von der Maschinenmitte 18 weglaufen. Dadurch, daß die Nachlaufgeräte 2 zur Maschinenmitte 18 hinlaufen, verringert sich auch der Abstand A zwischen den in Maschinenmitte 18 angeordneten Säscharen 6′ derart, daß der Abstand in etwa dem Abstand benachbarter Säschare 6 der hinter den Drillmaschinen 4 angeordneten Säschare 6 entspricht und sich somit keine große unbesäte Lücke im Bereich der Maschinenmitte 18 ergibt. Damit die beiden nebeneinander hinter dem Bodenbearbeitungsgerät 1 angeordneten Nachlaufgeräte 2 sich im mittleren Bereich bei dem seitlichen Berühren nicht beschädigen, sind in diesem Bereich die Dämpfungs- und Gleitelemente 20 angeordnet. Eine unabhänige Höhenbeweglichkeit beider Nachlaufgeräte gegeneinander ist gewährleistet, so daß die Nachlaufgeräte Bodenunebenheiten exakt anpassen können.

## Patentansprüche

1. Geschlossene Gerätekombination bestehend aus einem vorlaufenden Bodenbearbeitungsgerät (1) mit einem eine Eigenelastizität aufweisenden Rahmen (7) und daran angeordneten Bodenbearbeitungswerkzeugen und zwei dahinter angekuppelten Nachlaufgeräten (2), die jeweils etwa die halbe Arbeitsbreite wie das vorlaufende Bodenbearbeitungsgerät (1) aufweisen, mit auf dem Boden abrollenden Rädern, Walzen (3) etc., wobei die Nachlaufgeräte (2) jeweils über zwei benachbarte Unterlenker (13,14) und zumindest einen Oberlenker (15) an dem Rahmen (7) des Bodenbearbeitungsgerätes (1) angekuppelt sind, wobei das vorlaufende Bodenbearbeitungsgerät (1) übliche Dreipunktkupplungselemente (10) auf der Vorderseite des Rahmens (7) zur Ankupplung an den Dreipunktkraftheber eines Schleppers aufweist, dadurch gekennzeichnet, daß die durch die auf den Boden abrollenden Räder, Walzen (3) etc. verlaufenden Drehachsen (16) der Nachlaufgeräte im unbelasteten Zustand nicht miteinander fluchten, sondern einen auf der Fahrtrichtung (17) zugewandten Seite in der Draufsicht gesehen stumpfen Winkel miteinander einschliessen, und daß aufgrund der Eigenelastizität des Rahmens (7) des vorlaufenden Bodenbearbeitungsgerätes (1) die Drehachsen der Nachlaufgeräte (2) bei ihrem Arbeitseinrsatz annähernd fluchten.

2. Gerätekombination nach Anspruch 1, dadurch gekennzeichnet, daß der äußere Unterlenker (13) jeweils kürzer ist als der innere Unterlenker (14).

3. Gerätekombination nach Anspruch 1, dadurch gekennzeichnet, daß der vordere Anlenkpunkt (12) jeweils für den inneren Unterlenker (14) an dem vorlaufenden Bodenbearbeitungsgerät (1) etwas nach hinten versetzt angeordnet ist.

4. Gerätekombination nach Anspruch 1, dadurch gekennzeichnet, daß der vordere Anlenkpunkt (11) jeweils für den äußeren Unterlenker (13) an dem vorlaufenden Bodenbearbeitungsgerät (1) etwas nach vorne versetzt gegenüber dem inneren Anlenkpunkt (12) für den inneren Unterlenker (14) angeordnet ist.

5. Gerätekombination nach Anspruch 1, dadurch gekennzeichnet, daß zwischen den einander berührenden Seiten der beiden Nachlaufgeräte (2) Dämpfungs- und Gleitelemente (20) angeordnet sind.

6. Gerätekombination nach einem oder mehreren der vorstehenden Ansprüche, dadurch gekennzeichnet, daß die Nachlaufgeräte (2) als Nachlaufwalze (3) ausgebildet sind, welche die Arbeitstiefe der Bodenbearbeitungswerkzeuge des vorlaufenden Bodenbearbeitungsgerätes (1) bestimmt.

7. Gerätekombination nach einem oder mehreren der vorstehenden Ansprüche, dadurch gekennzeichnet, daß die Nachlaufgeräte (2) bzw. die Nachlaufwalze (3) als an sich bekannter Reifenpacker ausgebildet ist, wobei auf dieser Nachlaufwalze (3) eine Drillmaschine (4) mit nachgeordneten Säscharen (6) aufgesattelt ist.

## Claims

1. Self-contained combination of implements, including one advancing ground cultivating implement (1), which is provided with a frame (7) having its own inherent resilience and ground cultivating tools disposed thereon, and two follower implements (2), which are connected therebehind and each have substantially half the working width of the advancing ground cultivating implement (1), said follower implements being provided with wheels, rollers (3), etc., which travel on the ground, the follower implements (2) each being connected to the frame (7) of the ground cultivating implement (1) via two adjacent lower guide members (13, 14) and at least one upper guide member (15), the advancing ground cultivating implement (1) having conventional three-point coupling members (10) on the front of the frame (7) for connection with the three-point hydraulic lift of a tractor, characterised in that the rotary axes (16) of the follower implements, which extend through the wheels, rollers (3), etc. travelling on the ground, are not in alignment with each other in the non-loaded state, but form an obtuse angle with each other on the side facing the direction of travel (17), when viewed from above, and in that the rotary axes of the follower implements (2) are approximately in alignment during their operational use because of the inherent resilience of the frame (7) of the advancing ground cultivating implement (1).

2. Combination of implements according to claim 1, characterised in that the outer lower guide member (13) is, in each case, shorter than the inner lower guide member (14).

3. Combination of implements according to claim 1, characterised in that the front pivot point (12) for the respective inner lower guide member (14) is disposed on the advancing ground cultivating implement (1) in a somewhat rearwardly offset manner.

4. Combination of implements according to claim 1, characterised in that the front pivot point (11) for the respective outer lower guide member (13) is disposed on the advancing ground cultivating implement (1) in a somewhat forwardly offset manner relative to the inner pivot point (12) for the inner lower guide member (14)

5. Combination of implements according to claim 1, characterised in that damping and sliding members (20) are disposed between the sides of the two follower implements (2) which are in contact with each other.

6. Combination of implements according to one or more of the preceding claims, characterised in that the follower implements (2) are in the form of follower roller (3), which determines the working depth of the ground cultivating tools of the advancing ground cultivating implement (1).

7. Combination of implements according to one or more of the preceding claims, characterised in that the follower implements (2), or respectively the follower roller (3), are or is in the form of a tyre compactor known per se, a drill (4) with subsequently disposed sowing coulters (6) being pivotally mounted on this follower roller (3).

## Revendications

1. Combinaison d'outils, fermée, composée d'une machine pour le travail du sol (1), en amont, ayant un châssis (7) présentant une élasticité propre, et portant des outils pour le travail du sol ainsi que deux outils suiveurs (2), attelés, qui correspondent chaque fois à la moitié de la largeur de travail de la machine amont (1), avec des roues, des rouleaux (3) qui roulent sur le sol, etc..., les outils suiveurs (2) étant attelés chaque fois par deux bras inférieurs voisins (13, 14) et au moins à un bras supérieur (15) au châssis (7) de la machine pour le travail du sol (1), la machine amont (1) ayant des éléments d'attelage en trois points (10), usels, sur le côté avant du châssis (7) pour être attelés au moyen de levage en trois points d'un tracteur, combinaison caractérisée en ce que les axes de rotation (16) des roues, rouleaux (3), etc... qui roulent sur le sol, des outils suiveurs, ne sont pas alignés à l'état de repos, mais font entre eux un certain angle obtus en vue de dessus, angle tourné dans la direction de déplacement (17) et l'élasticité propre du châssis (7) de la machine pour le travail du sol (1), en amont, fait pratiquement aligner les axes de rotation des outils suiveurs (2) en position de travail.

2. Combinaison d'outils selon la revendication 1, caractérisée en ce que le bras inférieur extérieur (13) est plus court que le bras inférieur intérieur (14) respectif.

3. Combinaison d'outils selon la revendication 1, caractérisée en ce que le point d'articulation avant (12) est légèrement décalé vers l'arrière respectivement pour le bras inférieur (14) intérieur sur la machine amont (1).

4. Combinaison d'outils selon la revendication 1, caractérisée en ce que le point d'articulation avant (11) est chaque fois décalé légèrement vers l'avant pour le bras inférieur extérieur (13) sur la machine amont (1), par rapport au point d'articulation (12) intérieur pour le bras inférieur intérieur (14).

5. Combinaison d'outils selon la revendication 1, caractérisée en ce qu'entre les côtés en contact des deux outils suiveurs (2) on a des éléments d'amortissement et de glissement (20).

6. Combinaison d'outils selon une ou plusieurs des revendications précédentes, caractérisée en ce que les outils suiveurs (2) sont des rouleaux suiveurs (3) qui définissent la profondeur de travail des outils pour le travail du sol de la machine amont (1).

7. Combinaison d'outils selon une ou plusieurs des revendications précédentes, caractérisée en ce que les outils suiveurs (2) ou les rouleaux suiveurs (3) sont des rouleaux compacteurs à pneumatiques, connus en soi, et ces rouleaux suiveurs (3) portent un semoir (4) avec des socs de semoir (6) en aval.
